# EUROPEAN PATENT APPLICATION

(11) **EP 1 921 406 A1**
(43) Date of publication of application: **14.05.2008**
(21) Application number: 06123685.7
(22) Date of filing: 08.11.2006
(51) Int. Cl.: F25J 1/02, G05B 13/04

(54) **A process of liquefying a gaseous methane-rich feed for obtaining liquid natural gas**

(71) Applicant: Honeywell Control Systems Ltd., Bracknell, Berkshire RG12 1EB (GB)
(72) Inventor: Coward, Brian A., Southampton, UK S016 OTL (GB)
(74) Representative: TBK-Patent

(57) **Abstract**

A process for liquefying a gaseous methane-rich feed (20) to obtain liquefied natural gas, wherein a gaseous methane-rich feed at elevated pressure is conducted through a heat exchanger (1), where it is cooled, liquefied and sub-cooled against evaporating refrigerant. The liquefied product (21) is discharged from the heat exchanger. The refrigerant cycles in a closed loop, wherein the evaporated refrigerant (22) is removed from the heat exchanger, and is compressed (30) to get high pressure refrigerant which is cooled (31,32) and divided into a liquid (heavy) portion (24) and a gaseous (light) portion (25), which are conducted to the heat exchanger for sub-cooling and liquefying the gaseous methane-rich feed. The sub-cooled refrigerant portions (35,37) are introduced into the shell of the heat exchanger at respective positions for being evaporated. The process is controlled by two separate process controllers, wherein the mass flow of the methane-rich feed is controlled by using a first process controller, and the loop of the refrigerant is controlled by a second controller using a model predictive control.

## Description

The present invention relates to a process of liquefying a gaseous methane-rich feed to obtain liquefied natural gas (LNG). In particular, the present invention relates to a method for controlling the liquefaction process.

A known liquefaction process comprises the steps of supplying the gaseous methane-rich feed at elevated pressure to a first path of a main heat exchanger at its warm end, cooling, liquefying and sub-cooling the gaseous methane-rich feed against evaporating refrigerant to get a liquefied stream, which is removed from the main heat exchanger at its cold end and stored as a liquefied product.

The evaporated refrigerant is removed from the shell of the main heat exchanger at its warm end and is subsequently compressed in at least one refrigerant compressor to get high-pressure refrigerant. The high-pressure refrigerant is partly condensed and separated in a refrigerant-separator for obtaining, from the partly-condensed refrigerant, a liquid heavy refrigerant fraction and a gaseous light refrigerant fraction.

Then, the heavy refrigerant fraction is sub-cooled in a second path of the main heat exchanger to get a sub-cooled heavy refrigerant stream, the heavy refrigerant stream is introduced at reduced pressure into the shell of the main heat exchanger at its mid-point, and the heavy refrigerant stream is allowed to evaporate in the shell.

At least part of the light refrigerant fraction is cooled, liquefied and sub-cooled in a third path of the main heat exchanger to get a sub-cooled light refrigerant stream, the light refrigerant stream is introduced at reduced pressure into the shell of the main heat exchanger at its cold end, and the light refrigerant stream is allowed to evaporate in the shell.

For controlling such a process, e.g. WO 99/31448 discloses a process controller which is based on a model predictive control. The set of manipulated variables includes the mass flow rate of the heavy refrigerant fraction, the mass flow rate of the light refrigerant fraction and the mass flow rate of the methane-rich feed, wherein the set of controlled variables includes the temperature difference at the warm end of the main heat exchanger, which is the temperature difference between the gaseous methane rich feed to be cooled in the first path of the main heat exchanger and the refrigerant in the shell at the warm end of the main heat exchanger, and the temperature difference at the mid-point of the main heat exchanger, which is the temperature difference between the gaseous methane-rich feed to be cooled in the first path of the main heat exchanger and the refrigerant in the shell at the mid point of the main heat exchanger. The set of parameters to be optimized includes the production of a liquefied product.

WO 2004/068049 also discloses a process for liquefying natural gas, using a model predictive control for controlling the process which further comprises controlling of the bulk composition of the mixed refrigerants by adjusting the composition and the amount of refrigerant and controlling the liquefaction process. The set of manipulated variables includes the mass flow rate of the heavy refrigerant fraction, the mass flow rate of the light refrigerant fraction, the amount of refrigerant components make-up, the amount of refrigerant removed, the capacity of the refrigerant compressor and the mass flow rate of the methane-rich feed. The set of controlled variables includes the temperature difference at the warm end of a main heat exchanger, a variable relating to the temperature of the liquefied natural gas, the composition of the refrigerant entering a refrigerant-separator, the pressure in the shell of the main heat exchanger, the pressure in the refrigerant-separator and the level of the liquid in the refrigerant-separator. The set of variables to be optimized includes the production of a liquefied product.

However, such known control methods are not designed for a control of a plurality of e.g. parallel LNG trains from the front end where the material is received - e.g. from a offshore pipeline - through to the back end - e.g. the tankage -, in order to optimize the overall efficiency of a plant comprising that plurality of process trains.

There is a need for a process for liquefying LNG which can be implemented into a gas processing plant so that the holistic optimum of the plant as a whole may be optimized for the plant comprising at least one process train for liquefying natural gas.

The present invention provides a process and a control for liquefying a gaseous methane-rich feed to obtain liquefied natural gas, comprising the steps of supplying the gaseous, methane-rich feed at an elevated pressure to a first path of a main heat exchanger at its warm end, cooling, liquefying and sub-cooling the gaseous methane-rich feed against evaporating refrigerant to get a liquefied stream which is removed from the main heat exchanger at its cold end and stored as a liquefied product.

Refrigerant to be evaporated in a shell of the main heat exchanger is provided. The evaporated refrigerant is removed from the shell of the main heat exchanger at its warm end and is compressed in at least one refrigerant compressor to become high-pressure refrigerant. The high-pressure refrigerant is partly condensed and separated in a refrigerant-separator for obtaining, from the partly-condensed refrigerant, a liquid heavy refrigerant fraction and a gaseous light refrigerant fraction. The heavy refrigerant fraction is sub-cooled in a second path of the main heat exchanger to get a sub-cooled heavy refrigerant stream. The heavy refrigerant stream is introduced at reduced pressure into the shell of the main heat exchanger at its mid-point, and evaporates in the shell.

Further, at least part of the light refrigerant fraction is cooled, liquefied and sub-cooled in a third path of the main heat exchanger to get a sub-cooled light refrigerant stream. The light refrigerant stream is introduced at reduced pressure into the shell of the main heat exchanger at its cold end, and evaporates in the shell.

The mass flow of the methane-rich feed is controlled by using a first process controller, and the provision of the refrigerant is controlled by a second process controller, the refrigerant controller, which is based on a model predictive control for determining control actions for a set of manipulated variables to control a set of controlled variables. The set of manipulated variables comprises the mass flow of the light refrigerant and the mass flow of the heavy refrigerant, and the set of controlled variables comprises a first temperature difference between the fluid in the first path of the main heat exchanger and the fluid in the shell of the main heat exchanger at its warm end, and a second temperature difference between the fluid in the first path of the main heat exchanger and the fluid in the shell of the main heat exchanger at its mid point, and the set of parameters to be optimized includes the compensation of a disturbance value caused by the mass flow of the methane-rich feed.

Advantageous modifications of the present invention are depicted in the accompanying dependent claims.

The description of an embodiment of the present invention is made hereinafter with reference to the attached drawings, in which
Fig. 1 is a flow scheme of a process for liquefying natural gas;
Fig. 2 is a control scheme which shows the control of a plurality of processes for liquefying natural gas on a plant according to an embodiment of the present invention;
Fig. 3 schematically shows the inputs and outputs of the second process controller according to an embodiment of the present invention.

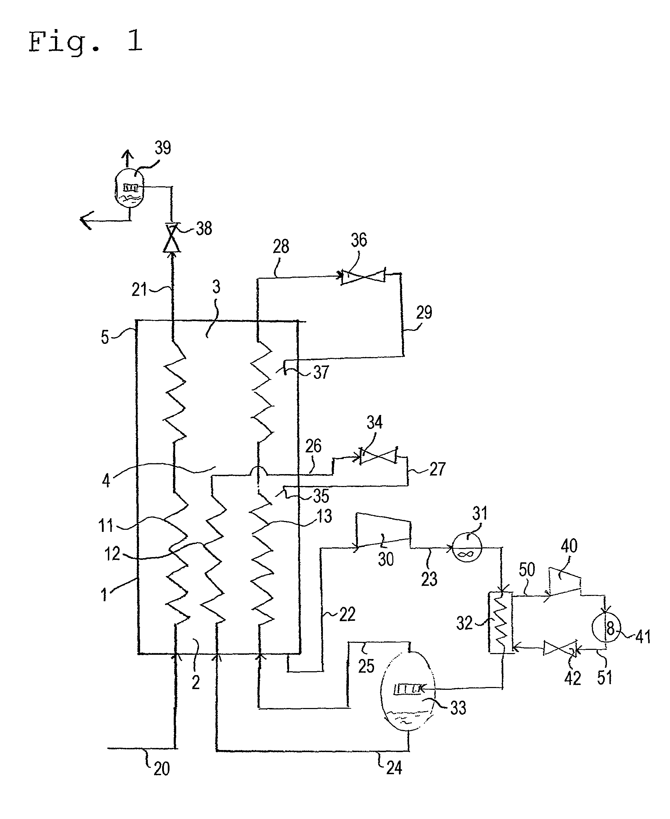

A single process for liquefying natural gas in a plant is shown in Fig. 1, which comprises a main heat exchanger 1 with a warm end 2, a cold end 3 and a mid-point 4. The wall 5 of the main heat exchanger 1 defines a shell 6. In the shell 6, a first path 11 for conducting the methane-rich feed extends from the warm end 2 to the cold end 3, a second path 12 for conducting the heavy refrigerant extends from the warm end 2 to the mid-point 7, and a third path 13 for conducting the light refrigerant extends from the warm end 2 to the cold end 3.

During normal operation, a gaseous methane-rich feed is supplied at elevated pressure through supply conduit 20 to the first path 11 of the main heat exchanger 1 at its warm end 2. The feed which passes through the first path 11, is cooled, liquefied and sub-cooled against refrigerant evaporating in the shell 6. The resulting liquefied stream is removed from the main heat exchanger 1 at its cold end 3 through conduit 21. The liquefied stream is passed to storage (not shown) where it is stored as a liquefied product at substantially atmospheric pressure.

Evaporated refrigerant is removed from the shell 6 of the main heat exchanger 1 at its warm end 2 through conduit 22.

In a refrigerant compressor 30, the evaporated refrigerant is compressed to get high-pressure refrigerant that is released through conduit 23. The refrigerant compressor 30 is driven by a suitable motor, for example a gas turbine, which may be provided with an auxiliary starting device.

Refrigerant at high pressure in conduit 23 is cooled in air cooler 31 and partly condensed in heat exchanger 32 to become partly condensed refrigerant. The air cooler 31 can be replaced by a heat exchanger in which refrigerant is cooled against water, e.g. seawater.

The high-pressure refrigerant is introduced through an inlet device into a separator in the form of a separator vessel 33. In the separator vessel 33, the partly condensed refrigerant is separated into a liquid heavy refrigerant fraction and a gaseous light refrigerant fraction. The liquid heavy refrigerant fraction is removed from the bottom of the separator vessel 33 through conduit 24, and the gaseous light refrigerant fraction is removed through conduit 25.

The heavy refrigerant fraction is sub-cooled in the second path 12 of the main heat exchanger 1 to get a sub-cooled heavy refrigerant stream. The sub-cooled heavy refrigerant stream is removed from the main heat exchanger 1 through conduit 26, and allowed to expand over an expansion device in the form of an expansion valve 34. At reduced pressure, it is introduced through conduit 27 and nozzle 35 into the shell 6 of the main heat exchanger 1 at its mid-point 4. The heavy refrigerant stream is allowed to evaporate in the shell 6 at reduced pressure, thereby cooling the fluids in paths 11, 12 and 13.

The gaseous light refrigerant fraction removed through conduit 25 is passed to the third path 13 in the main heat exchanger 1 where it is cooled, liquefied and sub-cooled to get a sub-cooled light refrigerant stream. The sub-cooled light refrigerant stream is removed from the main heat exchanger 1 through conduit 28, and allowed to expand over an expansion device in the form of an expansion valve 36. At reduced pressure, it is introduced through conduit 29 and nozzle 37 into the shell 6 of the main heat exchanger 1 at its cold end 3. The light refrigerant stream is allowed to evaporate in the shell 6 at reduced pressure, thereby cooling the fluids in paths 11, 12 and 13.

The resulting liquefied stream is removed from the main heat exchanger 1 through conduit 21 and is passed to flash vessel 39. The conduit 21 is provided with an expansion device in the form of an expansion valve 38 to allow reduction of the pressure, so that the resulting liquefied stream is introduced via an inlet device into the flash vessel 39 at a reduced pressure.

Suitably, the reduced pressure is substantially equal to the atmospheric pressure. Expansion valve 38 also regulates the total flow of the product.

From the top of flash vessel 39, an off-gas is removed through conduit 21a. The off-gas can be compressed in an end-flash compressor (not shown) to get high-pressure fuel gas.

From the bottom of flash vessel 39, the liquefied product is removed through conduit 21b and is passed to storage (not shown).

In heat exchanger 32, high pressure refrigerant is partly condensed. In this heat exchanger, heat is removed by means of indirect heat exchange with an auxiliary refrigerant (for example propane) evaporating at a suitable pressure in the shell of the heat exchanger.

Evaporated auxiliary refrigerant is compressed in a compressor 40 for compressing e.g. propane (propane compressor) driven by a suitable motor, such as a gas turbine (not shown). Auxiliary refrigerant is condensed in air cooler 41, wherein air is the external coolant.

Condensed auxiliary refrigerant at elevated pressure is passed through conduit 51 provided with expansion valve 42 to the shell of heat exchanger 32. The condensed auxiliary refrigerant is allowed to evaporate at low pressure and evaporated auxiliary refrigerant is returned through conduit 50 to the propane compressor 40. It is understood that a plurality of propane compressors can be employed, which may be arranged in parallel or in series.

The air cooler 41 can be replaced by a heat exchanger in which refrigerant is cooled against water, e.g. seawater.

In order to integrate the control of the cycle of the auxiliary refrigerant with the control of the main heat exchanger 1, the set of manipulated variables further includes the capacity of the propane compressor 40, or compressors, and the set of controlled variables further includes the power to drive the propane compressor 40, or compressors. In this way, the utilization of the propane compressor can be maximized.

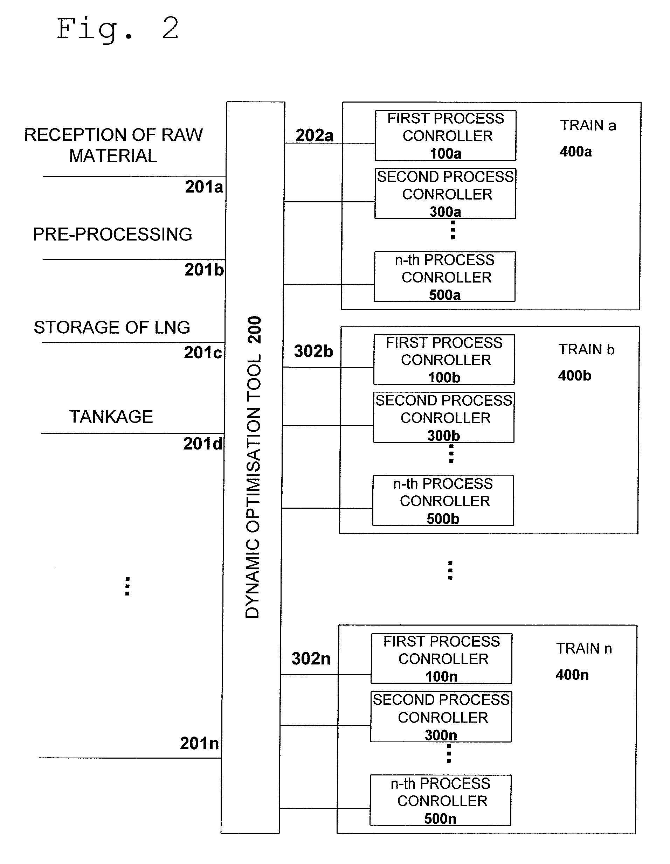

As shown in Fig. 2, a plant for liquefying natural gas contains a plurality of process trains 400a, 400b,..., 400n for liquefying methane-rich feed, wherein n defines the number of different trains. The different processes of the plant, like e.g. on the front end the reception of raw material 201a from an offshore pipeline, a pre-processing of the raw material 201b, or at the back end, the tankage of the liquid natural gas 201c or the storage of the liquid natural gas 201d is controlled by a control system (i.e. a dynamic optimization tool) 200 which globally optimizes associated processes within a process facility.

In the present embodiment, additional process controllers 500 can be provided for each train 400. These additional process controllers 500 may cover separate areas, such as e.g. fractionation, acid gas removal etc. The additional process controllers 500 in conjunction with the first and the second process controller 100, 300 can form a subset of the entire control solution which is coordinated and optimized by the optimization tool 200.

Furthermore, the dynamic optimization tool 200 determines, for each train 400 for liquefying methane-rich gas of the plant, an optimized value 202 for the mass flow rate of the methane-rich feed 203.

The optimization solution values 202 for each train are provided to the first process controller 100 of each train 400. The first process controller 100 of each train sets and controls the mass flow rate of the methane-rich feed 203 of the respective train 400.

A change of the mass flow rate of the methane-rich feed 203 influences the conditions in the main heat exchanger 1 so as to have e.g. an effect on the temperature in the main heat exchanger 1. Since the circulation of the refrigerant of each separate train is separately controlled by the second process controller 300 using a model predictive control, and the controlled variables include the temperature difference between the fluid in the first path 11 of the main heat exchanger 1 and the fluid in the shell 6 of the main heat exchanger 1 at its warm end 2, and a temperature difference between the fluid in the first path 11 of the main heat exchanger and the fluid in the shell 6 of the main heat exchanger 1 at its mid-point 4, the second process controller 300, which may also be named refrigerant controller, has to react to the disturbance value 302 obtained by a change in temperature.

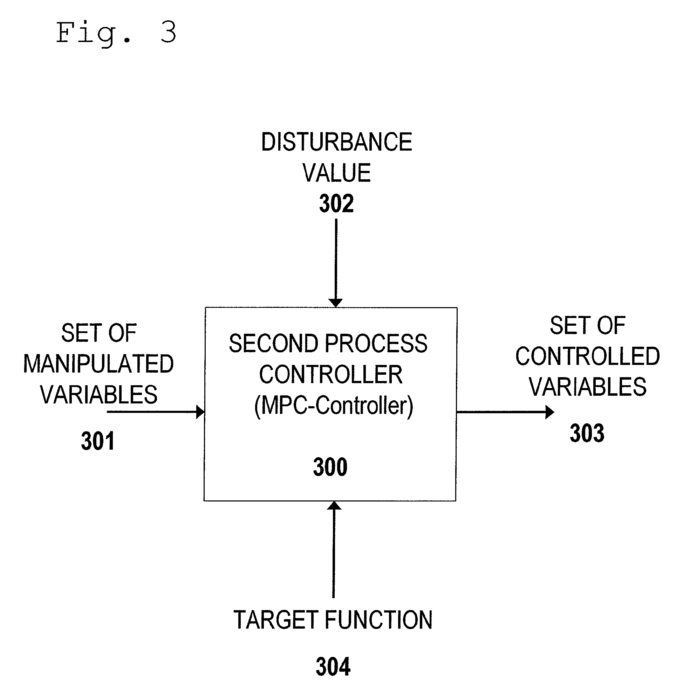

That is, the second process controller 300, as shown in Fig. 3, is adapted to set the manipulated variables 301 so as to maintain the desired temperature differences (controlled variables 303) in order to obtain the necessary conditions for suitably liquefying the methane-rich feed. Therefore, the disturbance value 302, which is mainly caused by a change of the mass flow rate of the methane-rich feed 203 and thus a change of the temperature in the main heat exchanger 1, has to be compensated.

During a normal operation of the plant and, therefore, of each train 400, the process within each train 400 is controlled, so as to be operated in the most efficient way. That is, for example, that a maximum output of LNG at a minimum of employed power for supplying the compressors, etc. is to be achieved by driving the compressors at an optimum operating point.

For example, when the capacity of the tanks for storing the LNG is exhausted, or there is an increased need for LNG, the overall dynamic optimization tool 200 is able to send an optimization solution 202 to each first process controller 100. The individual first process controller 100 then sets the flow rate of the methane-rich feed to a value in accordance with the optimization solution 202.

When, for example, the optimization tool 200 advises to decrease the amount of LNG for a certain train, and the first process controller 100 of the respective train 400 has set the flow rate of the methane-rich feed to a lower level, the temperature of the first path 11 of the main heat exchanger 1 will decrease due to a smaller supply of relatively warm feed. Therefore, the second process controller 300 of the respective train 400 detects the lower temperature in the main heat exchanger 1 and reacts to the thus generated elevated disturbance value 302. In order to compensate the disturbance value, e.g. the supply and/or the composition (e.g. the ratio of heavy and light refrigerant) of refrigerant to the main heat exchanger 1 is adapted so as to maintain the required temperature differences in the main heat exchanger for liquefying the newly set stream of natural gas.

If more liquefied natural gas is requested by the dynamic optimization tool than the present operation mode of a certain train 400 would produce, a respective optimization solution is provided to the respective first process controller 100 which in turn will increase the flow rate of the methane-rich feed of the respective train. The thus increased flow of the relatively warm feed changes the temperature in the main heat exchanger 1 so as to increase the temperature of the first path 11 of the main heat exchanger 1. This in turn is detected by the respective second process controller 300 by means of an increased or changed disturbance value. In order to maintain the required conditions in the main heat exchanger 1 suitable for liquefying natural gas, e.g. the supply and/or the composition (e.g. the ratio of heavy and light refrigerants) of refrigerant to the main heat exchanger 1 is adapted by means of the second process controller 300.

If, for example, fluctuations occur when material 201a is received, e.g. from an offshore pipeline, the dynamic optimization tool 200 detects the increase, decrease or change of raw material flow or composition and calculates and sends respective optimization solutions to the first process controller 100 automatically, which in turn can react to the increased or decreased availability of raw material and adapts the positions of the valves responsive for control the flow rate of the methane-rich feed, so as to operate the liquefaction process within the plant in an efficient way. No manual adjustment of the model predictive control of the second process controller 300 is required.

The present invention with the control architecture as described above, i.e. a first process controller 100 for controlling the mass flow rate of the methane-rich feed and a separate second process controller 300 for controlling the refrigerant loop, the control being provided with optimization solutions generated by a dynamic optimization tool for a global optimization of a plant, aims at ensuring that the holistic optimum is always approached. This increases the benefits of the overall control solution.

While the specific embodiment of the present invention has been described above in detail with reference to the accompanying drawings, it will be appreciated by those skilled in the art that various modifications can be made without departing from the scope of the present invention.

The above describes a process for liquefying a gaseous methane-rich feed to obtain liquefied natural gas, wherein a gaseous methane-rich feed at elevated pressure is conducted through a heat exchanger, where it is cooled, liquefied and sub-cooled against evaporating refrigerant. The liquefied product is discharged from the heat exchanger. The refrigerant cycles in a closed loop, wherein the evaporated refrigerant is removed from the heat exchanger, and is compressed to get high pressure refrigerant which is cooled and divided into a liquid (heavy) portion and a gaseous (light) portion, which are conducted to the heat exchanger for sub-cooling and liquefying the gaseous portion. The sub-cooled refrigerant portions are introduced into the shell of the heat exchanger at respective positions for being evaporated. The process is controlled by two separate process controllers, wherein the mass flow of the methane-rich feed is controlled by using a first process controller, and the loop of the refrigerant is controlled by a second controller using a model predictive control.

## Claims

1. A process for liquefying a gaseous methane-rich feed to obtain liquefied natural gas comprising the steps of:
supplying the gaseous methane-rich feed at elevated pressure to a first path (11) of a main heat exchanger (1) at its warm end (2), cooling, liquefying and sub-cooling the gaseous methane-rich feed against evaporating refrigerant to get a liquefied stream, which is removed from the main heat exchanger (1) at its cold end (3) and stored as a liquefied product; and
providing of refrigerant to be evaporated in a shell (6) of the main heat exchanger, wherein
the evaporated refrigerant is removed from the shell (6) of the main heat exchanger (1) at its warm end (2) and compressed in at least one refrigerant compressor (30) to become high-pressure refrigerant;
the high-pressure refrigerant is partly condensed and separated in a refrigerant separator (33) for obtaining, from the partly-condensed refrigerant, a liquid heavy refrigerant fraction and a gaseous light refrigerant fraction;
the heavy refrigerant fraction is sub-cooled in a second path (12) of the main heat exchanger (1) to get a sub-cooled heavy refrigerant stream, introducing the heavy refrigerant stream at reduced pressure into the shell (6) of the main heat exchanger (1) at its mid-point (4), and allowing the heavy refrigerant stream to evaporate in the shell (6); and
at least part of the light refrigerant fraction is cooled, liquefied and sub-cooled in a third path (13) of the main heat exchanger (1) to get a sub-cooled light refrigerant stream, introducing the light refrigerant stream at reduced pressure into the shell (6) of the main heat exchanger (1) at its cold end (3), and allowing the light refrigerant stream to evaporate in the shell (6),
**characterized in that**
the mass flow of the methane-rich feed is controlled by using a first process controller (100); and
the provision of the refrigerant is controlled by a second controller (300) for determining control actions for a set of manipulated variables (301) to control a set of controlled variables (303) based on a model predictive control,
wherein the set of manipulated variables (301) comprises the mass flow of the light refrigerant and the mass flow of the heavy refrigerant, and the set of controlled variables (303) comprises a temperature difference between the fluid in the first path (11) of the main heat exchanger (1) and the fluid in the shell (6) of the main heat exchanger (1) at its warm end (2), and a temperature difference between the fluid in the first path (11) of the main heat exchanger (1) and the fluid in the shell (6) of the main heat exchanger (1) at its mid point (4), and the set of parameters to be optimized includes the compensation of a disturbance value (302) caused by the mass flow of the methane-rich feed.

2. The process according to claim 1, wherein the first process controller (100) acts based on optimization solutions provided by an external dynamic optimization tool (200).

3. The process according to claim 1 or 2, wherein the set of manipulated variables (301) of the second process controller (300) comprises the speed of the at least one refrigerant compressor (30).

4. The process according to any of claims 1 to 3, wherein the high-pressure refrigerant is partly condensed, using at least one heat exchanger (32) operating with propane evaporating at a suitable pressure.

5. The process according to claim 4, wherein the evaporated propane is compressed by at least one propane compressor (40), wherein the set of manipulated variables (301) of the second process controller (300) further comprises the speed of the at least one propane compressor (40) and the suction pressure of the at least one propane compressor (40).

6. A plant including at least one process train (400) for liquefying a gaseous methane-rich feed to obtain liquefied natural gas according to any of claims 1 to 5,
wherein a dynamic optimization tool (200) comprises a calculation means which is adapted to calculate optimization solutions in order to coordinate the at least one process train (400) for achieving maximum efficiency,
**characterized in that** the calculating means is adapted for calculating a desired value (202) for the mass flow of the methane-rich feed for each of the at least one process train (400), and for providing the desired value (202) to the first process controller (100) of each of the at least one process train (400).
